# EUROPÄISCHE PATENTANMELDUNG

(11) **EP 1 701 430 A2**
(43) Veröffentlichungstag der Anmeldung: **13.09.2006**
(21) Anmeldenummer: 06003659.7
(22) Anmeldetag: 23.02.2006
(51) Int. Cl.: H02K 7/06

(54) **Antriebssystem**

(30) Priorität: 12.03.2005 DE 202005003981 U
(71) Anmelder: elero GmbH, 72660 Beuren (DE)
(72) Erfinder: Blum, Hartmut, 07749 Jena (DE)
(74) Vertreter: Ruckh, Rainer Gerhard

(57) **Zusammenfassung**

Das erfindungsgemäße Antriebssystem umfasst eine Kolbenstange, welche mittels eines Elektromotors mit einem Rotor und Stator in eine Linearbewegung versetzbar ist. Ein längsseitiges Ende der Kolbenstange ist mit einer koaxial zu dieser verlaufenden, verdrehsicher gelagerten Spindel fest verbunden, welche mittels einer mit dem Rotor starr gekoppelten Mutter angetrieben ist.

## Beschreibung

Die Erfindung betrifft ein Antriebssystem gemäß dem Oberbegriff des Anspruchs 1.

Derartige Antriebssysteme werden insbesondere zur Verriegelung von Objekten eingesetzt. Insbesondere können diese Antriebssysteme zur Verriegelung von Kanaldeckeln eingesetzt werden. Die Verriegelung von Kanaldeckeln stellt einen wesentlichen Aspekt im sicherheitstechnischen Bereich bei der Absicherung von Straßen dar. Dieser Bereich hat in den letzten Jahren erheblich an Bedeutung gewonnen. An die hierfür eingesetzten Antriebssysteme sind hinsichtlich ihrer Leistungsfähigkeit und Ausfallsicherheit hohe Anforderungen zu stellen, damit auch über längere Zeiträume ein ausfallsicherer Betrieb zur Verriegelung der Kanaldeckel gewährleistet ist.

Generell können derartige Antriebssysteme mit Linearbewegungen durchführenden Elementen wie Kolbenstangen für verschiedenartige Verriegelungsprozesse oder weitere Applikationen eingesetzt werden.

Der Erfindung liegt die Aufgabe zugrunde ein Antriebssystem der eingangs genannten Art bereitzustellen, welches bei robustem und kompaktem Aufbau eine hohe Zuverlässigkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Antriebssystem umfasst eine Kolbenstange, welche mittels eines Elektromotors mit einem Rotor und Stator in eine Linearbewegung versetzbar ist. Ein längsseitiges Ende der Kolbenstange ist mit einer koaxial zu dieser verlaufenden, verdrehsicher gelagerten Spindel fest verbunden, welche mittels einer mit dem Rotor starr gekoppelten Mutter angetrieben ist.

Durch die direkte fest mit dem Rotor verbundene Mutter, die die Spindel zur Erzeugung der Linearbewegung der Kolbenstange antreibt, wird eine besonders robuste und kompakte Bauform des erfindungsgemäßen Antriebssystems erhalten. Durch die verdrehsichere Lagerung der Spindel ist dabei auf einfache Weise gewährleistet, dass die Rotationsbewegung des Rotors in eine reine Translationsbewegung der Kolbenstange umgesetzt wird.

In einer vorteilhaften Ausführungsform ist die die Spindel antreibende Mutter als Kunststoff-Spritzteil ausgebildet, welches auf eine mit dem Rotor fest verbundene Ankerwelle aufgespritzt wird. Diese Ausführungsform ist besonders einfach und kostengünstig herstellbar.

In einer weiteren vorteilhaften Ausführungsform der Erfindung ist die Kolbenstange zwischen zwei Endpositionen verschiebbar, wobei zur Kontrolle der Endpositionen Endschalter vorgesehen sind, die mit einem Schaltnocken zusammen wirken. Besonders vorteilhaft wird der zwischen den Endschaltern verschiebbare Schaltnocken zur verdrehsicheren Lagerung der Spindel genützt. Durch diese Doppelfunktion des Schaltnockens kann die Teilezahl des Antriebssystems reduziert werden, was zu einer Reduzierung der Herstellkosten und gleichzeitig zu einer kompakten Bauform des Antriebssystems beträgt.

Um die verdrehsichere Lagerung der Spindel zu gewährleisten ist der Schaltnocken zweckmäßigerweise an einem längsseitigen Ende der Spindel befestigt und das freie Ende des Schaltnockens als gabelförmige Aufnahme ausgebildet, die an einem Führungselement verschiebbar gelagert ist.

In einer besonders einfachen und zweckmäßigen Ausgestaltung der Erfindung ist das Führungselement von einer Befestigungsschraube gebildet, welche den Gehäusedeckel mit dem Gehäuse des Antriebssystems verbindet. Durch die Doppelfunktion der Befestigungsschraube kann wiederum die Teilezahl des erfindungsgemäßen Antriebssystems reduziert werden.

Auch hinsichtlich der elektrischen Komponenten weist das erfindungsgemäße Antriebssystem einen kompakten und platzsparenden Aufbau auf. Die Endschalter sind auf einer Leiterplatte angeordnet, auf welcher auch elektrische und elektronische Bauelemente zur Steuerung des Antriebssystems, insbesondere ein Kondensator zur Ansteuerung der Spulen des Stators integriert sind. Diese Komponenten sind zudem mit einem Kunststoff-Mantel gekapselt, wodurch ein elektrischer Isolierschutz erzielt wird. Insbesondere ist durch diese Kapselung gewährleistet, dass über eine Kabelverschraubung in das Gehäuse geführte Kabel nicht in den Bereich der Endschalter und des Schaltnockens ragen, was zu einer unerwünschten Funktionsbeeinträchtigung führen würde.

In einer besonders vorteilhaften Ausführungsform ist das Gehäuse des erfindungsgemäßen Antriebssystems, insbesondere durch Einsatz geeigneter Dichtmittel, wasserdicht ausgebildet, so dass bis zu einem vorgegebenen Wasserdruck kein Wasser in den Innenraum des Gehäuses eindringt. Weiterhin ist vorteilhaft im Innenraum des Gehäuses an vorgegebenen Stellen ein Trockengel fixiert, welches im Innenraum des Gehäuses vorhandenes Wasser aufsaugt und bindet.

Das erfindungsgemäße Antriebssystem kann besonders vorteilhaft zur Verriegelung von Gegenständen, insbesondere Kanaldeckeln eingesetzt werden, wobei mit der Linearbewegung der Kolbenstange Verriegelungsvorgänge beziehungsweise Endriegelungsvorgänge durchgeführt werden.

Die Erfindung wird im Nachstehenden anhand der Zeichnungen erläutert. Es zeigen:
- Figur 1:: Dreidimensionale Darstellung eines Ausführungsbeispiels des erfindungsgemäßen Antriebssystems.
- Figur 2:: Längsschnitt durch das Antriebssystem gemäß Figur 1.
- Figur 3:: Perspektivische Darstellung des Gehäuses des Antriebssystems gemäß Figur 1.

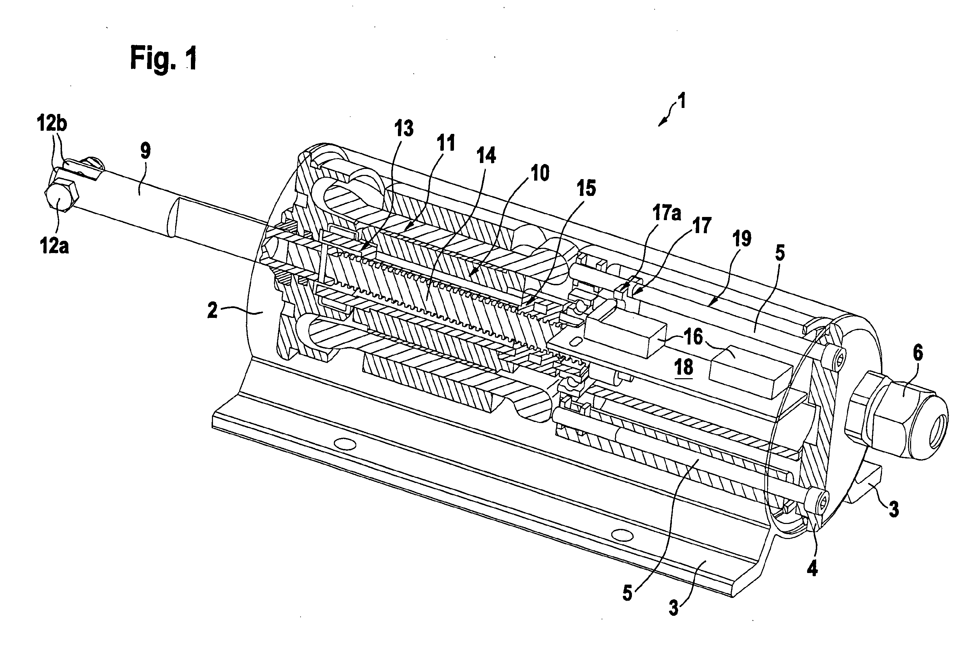

Die Figuren 1 bis 3 zeigen ein Ausführungsbeispiel eines Antriebssystems, welches im vorliegenden Fall ein Verriegelungssystem insbesondere für Kanaldeckel bildet.

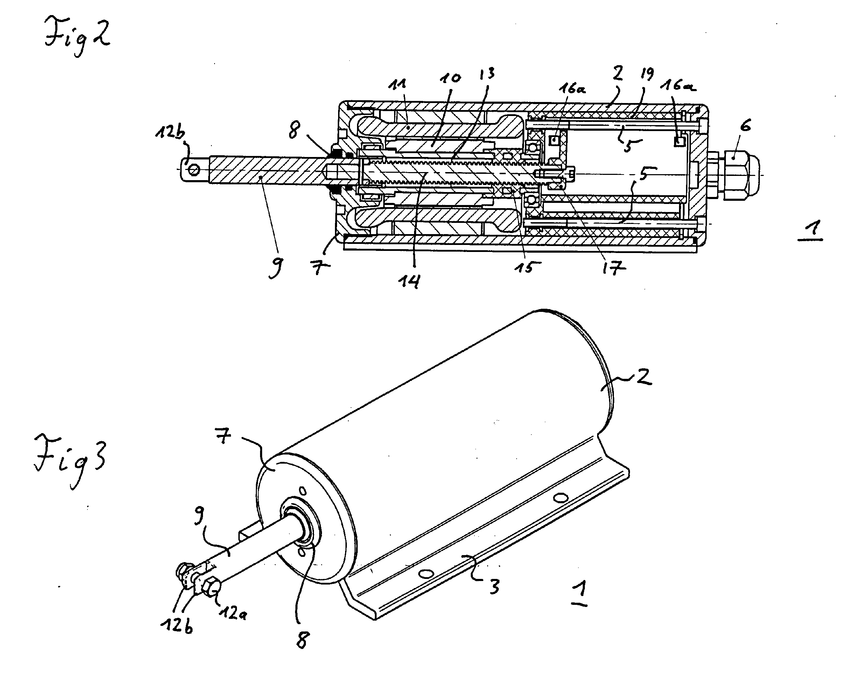

Figur 1 zeigt eine perspektive Darstellung der Komponenten des Antriebssystems 1, welche in einem Gehäuse 2 integriert sind. Figur 2 zeigt einen Längsschnitt durch das Antriebssystem 1. Figur 3 zeigt eine perspektive Ansicht des Gehäuses 2 des Antriebssystems 1.

Wie insbesondere aus den Figuren 1 und 3 ersichtlich ist das Gehäuse 2 hohlzylindrisch ausgebildet, wobei an dem Mantel des Gehäuses 2 zwei Halteleisten 3 ausmünden, mittels derer das Antriebssystem 1 an einer nicht dargestellten Unterlage befestigt werden kann.

Die rückseitige Stirnseite des Gehäuses 2 ist mit einem Gehäusedeckel 4 verschlossen, der mittels mehrerer Befestigungsschrauben 5 am Gehäuse 2 verschraubt wird. Zur Stromversorgung des Antriebssystems 1 ist am Gehäusedeckel 4 eine Kabelverschraubung 6 vorgesehen, über welche nicht dargestellte Kabel in den Innenraum des Gehäuses 2 geführt werden.

Die Frontseite des Gehäuses 2 ist mit einem Frontdeckel 7 verschlossen. Im Zentrum des Frontdeckels 7 befindet sich eine Dichtmanschette 8, in welcher eine Kolbenstange 9 geführt ist.

Die Kolbenstange 9 kann in deren Längsrichtung zur Durchführung von Verriegelungsvorgängen verschoben werden. Die Längsverschiebung der Kolbenstange 9 erfolgt mittels eines im Gehäuse 2 integrierten Elektromotors, der einen Rotor 10 und einen Stator 11 aufweist.

Das vordere Ende der Kolbenstange 9 ragt über die Frontseite des Gehäuses 2 hervor. An dem freien Ende der Kolbenstange 9 sind Befestigungsmittel vorgesehen, um die Kolbenstange 9 an den zu verriegelnden Gegenstand, im vorliegenden Fall dem Kanaldeckel zu befestigen. Die Befestigungsmittel sind im vorliegenden Fall von einer Schraube 12a, die in gabelförmigen Armen 12b der Kolbenstange 9 gelagert sind, gebildet.

Mit dem Rotor 10 des Elektromotors ist eine Ankerwelle 13 verpresst, so dass beide Komponenten starr miteinander verbunden sind. Die Ankerwelle 13 umschließt eine Spindel 14, die koaxial mit der Kolbenstange 9 verläuft. Das hintere im Gehäuse 2 liegende Ende der Kolbenstange 9 ist mit der Spindel 14 fest verbunden. Prinzipiell können die Spindel 14 und die Kolbenstange 9 einstückig ausgebildet sein. Im vorliegenden Fall ist die Kolbenstange 9 mit der Spindel 14 verstiftet. Die Spindel 14 selbst ist im vorliegenden Fall als Trapezspindel ausgebildet.

Das dem Frontdeckel 7 abgewandte Ende der Ankerwelle 13 ist fest mit einer Mutter 15 verbunden, die die Spindel 14 umschließt. Die Mutter 15 besteht im vorliegenden Fall aus einem Kunststoff Spritzteil, das auf die Ankerwelle 13 aufgespritzt wird. Mit der Mutter 15 wird die Spindel 14 angetrieben, wodurch die Kolbenstange 9 eine Verschiebung in Richtung deren Längsachse ausführt. Damit die Drehbewegung des Rotors 10 und der Ankerwelle 13, über welche die Mutter 15 angetrieben wird, in eine reine Translationsbewegung der Spindel und der Kolbenstange 9 umgesetzt wird, ist die Spindel 14 im Gehäuse 2 verdrehsicher gelagert.

Die Spindel 14 und damit die Kolbenstange 9 kann zwischen zwei Endpositionen verschoben werden. Jede Endposition wird mittels eines Endschalters 16 kontrolliert. Die Endschalter 16 sind im vorliegenden Fall als mechanische Schalter ausgebildet, die mit einem Schaltnocken 17 betätigt werden. Die Betätigung erfolgt derart, dass der Schaltnocken 17 gegen einen Bügel 16a des jeweiligen Endschalters 16 geführt ist.

Der Schaltnocken 17 kann zwischen den Endpositionen bewegt werden und ist hierzu am hinteren Ende der Spindel 14 fest geschraubt. Sobald der Schaltnocken 17 im Eingriff mit einem der Endschalter 16 ist, wird der Elektromotor gestoppt, wodurch verhindert wird, dass sich die Kolbenstange 9 über die jeweilige Endposition hinaus bewegt.

Der Schaltnocken 17 bildet zusätzlich die verdrehsichere Lagerung für die Spindel 14 und die Kolbenstange 9. Hierzu ist das obere freie Ende des Schaltnockens 17 in Form einer gabelförmigen Aufnahme 17a ausgebildet. Diese gabelförmige Aufnahme 17a des Schaltnockens 17 ist an einer der Befestigungsschrauben 5 als Führungselement geführt, wodurch der Schaltnocken 17 verdrehsicher und nur in Längsrichtung verschiebbar an der Befestigungsschraube 5 geführt wird.

Die Endschalter 16 sind auf einer Leiterplatte 18 angeordnet, auf welche auch die elektronischen beziehungsweise elektrischen Komponenten zur Steuerung des Antriebssystems 1 integriert sind. Insbesondere ist auf die Leiterplatte 18 ein nicht gesondert dargestellter Kondensator zur Ansteuerung der Spulen des Stators 11 aufgelötet.

Der Bereich des Gehäuse-Innenraums, in welchem die Leiterplatte 18 mit den Endschaltern 16 zwei der Schaltnocken 17 angeordnet sind, ist mit einem Kunststoff-Mantel 19 gekapselt. Dadurch ist gewährleistet, dass keine Kabel in diesen Bereich ragen, welche die Bewegung des Schaltnockens 17 blockieren könnten.

## Patentansprüche

1. Antriebssystem mit einer Kolbenstange, welche mittels eines Elektromotors mit einem Rotor und Stator in eine Linearbewegung versetzbar ist, **dadurch gekennzeichnet, dass** ein längsseitiges Ende der Kolbenstange (9) mit einer koaxial zu dieser verlaufenden, verdrehsicher gelagerten Spindel (14) fest verbunden ist, welche mittels einer mit dem Rotor (10) starr gekoppelten Mutter (15) angetrieben ist.

2. Antriebssystem nach Anspruch 1, **dadurch gekennzeichnet, dass** der Rotor (10) eine Ankerwelle (13) umschließt und fest mit dieser verbunden ist, und dass an der Ankerwelle (13) die Mutter (15) fixiert ist.

3. Antriebssystem nach Anspruch 2, **dadurch gekennzeichnet, dass** die Mutter (15) aus einem auf die Ankerwelle (13) aufgespritzten Kunststoff-Spritzteil besteht.

4. Antriebssystem nach einem der Ansprüche 1 bis 3, **dadurch gekennzeichnet, dass** die Spindel (14) mit der Kolbenstange (9) verstiftet ist.

5. Antriebssystem nach einem der Ansprüche 1 bis 4, **dadurch gekennzeichnet, dass** die Spindel (14) als Trapezspindel ausgebildet ist.

6. Antriebssystem nach einem der Ansprüche 1 bis 5, **dadurch gekennzeichnet, dass** die Kolbenstange (9) zwischen zwei Endpositionen verschiebbar ist.

7. Antriebssystem nach Anspruch 6, **dadurch gekennzeichnet, dass** zur Kontrolle jeder Endposition ein Endschalter (16) vorgesehen ist.

8. Antriebssystem nach Anspruch 7, **dadurch gekennzeichnet, dass** die Endschalter (16) mittels eines Schaltnockens (17) betätigbar sind.

9. Antriebssystem nach Anspruch 8, **dadurch gekennzeichnet, dass** der Schaltnocken (17) an dem der Kolbenstange (9) abgewandten längsseitigen Ende der Spindel (14) befestigt ist.

10. Antriebssystem nach einem der Ansprüche 8 oder 9, **dadurch gekennzeichnet, dass** der Schaltnocken (17) die Verdrehsicherung für die Spindel (14) bildet.

11. Antriebssystem nach Anspruch 10, **dadurch gekennzeichnet, dass** das freie Ende des Schaltnockens (17) eine gabelförmige Aufnahme (17a) bildet, welche an einem Führungselement verschiebbar gelagert ist.

12. Antriebssystem nach einem der Ansprüche 1 bis 11, **dadurch gekennzeichnet, dass** dieses in einem hohlzylindrischen Gehäuse (2) integriert ist, über dessen Frontseite die Kolbenstange (9) hervorsteht, und dessen Rückseite mit einem Gehäusedeckel (4) verschlossen ist.

13. Antriebssystem nach Anspruch 12, **dadurch gekennzeichnet, dass** der Gehäusedeckel (4) mittels Befestigungsschrauben (5) am Gehäuse (2) fixierbar ist.

14. Antriebssystem nach Anspruch 13, **dadurch gekennzeichnet, dass** eine der im Innenraum des Gehäuses (2) abschnittsweise freiliegenden Befestigungsschrauben (5) das Führungselement für den Schaltnocken (17) bildet.

15. Antriebssystem nach einem der Ansprüche 7 bis 14, **dadurch gekennzeichnet, dass** die Endschalter (16) auf einer Leiterplatte (18) aufsitzen.

16. Antriebssystem nach Anspruch 15, **dadurch gekennzeichnet, dass** elektronische Bauelemente zu dessen Steuerung auf der Leiterplatte (18) angeordnet ist.

17. Antriebssystem nach Anspruch 16, **dadurch gekennzeichnet, dass** auf der Leiterplatte (18) ein Kondensator zur Ansteuerung der Spulen des Stators (11) angeordnet ist.

18. Antriebssystem nach Anspruch 15 bis 17, **dadurch gekennzeichnet, dass** der Bereich des Gehäuse-Innenraums, in welchem die Leiterplatte (18) mit den Endschaltern (16) sowie der Schaltnocken (17) angeordnet sind, mit einem Kunststoff-Mantel (19) gekapselt ist.

19. Antriebssystem nach Anspruch 12, **dadurch gekennzeichnet, dass** die Frontseite des Gehäuses (2) mit einem Frontdeckel (7) verschlossen ist.

20. Antriebssystem nach Anspruch 19, **dadurch gekennzeichnet, dass** im Zentrum des Frontdeckels (7) eine Dichtmanschette (8) zur Führung der über die Frontseite des Gehäuses (2) hervorstehenden Kolbenstange (9) vorgesehen ist.

21. Antriebssystem nach einem der Ansprüche 1 bis 20, **dadurch gekennzeichnet, dass** die Kolbenstange (9) ein Verriegelungselement bildet.

22. Antriebssystem nach Anspruch 21, **dadurch gekennzeichnet, dass** an dem vorderen freien Ende der Kolbenstange (9) Befestigungsmittel zum Anschluss an einen Kanaldeckel vorgesehen sind.
